# EUROPEAN PATENT SPECIFICATION

(11) **EP 0 971 819 B1**
(45) Date of publication and mention of the grant of the patent: **03.12.2003**
(21) Application number: 98914978.6
(22) Date of filing: 03.04.1998
(51) Int. Cl.: B32B 27/32, B65D 77/20, B65D 75/58, A61B 19/02

(54) **POLYMERIC FILMS AND PACKAGES PRODUCED THEREFROM**
KUNSTSTOFFOLIEN UND DARAUS HERGESTELLTE VERPACKUNGEN
FILMS DE POLYMERE ET EMBALLAGES EN ETANT FAITS

(30) Priority: 04.04.1997 GB 9706901; 24.12.1997 GB 9727169; 21.01.1998 GB 9801127
(43) Date of publication of application: 19.01.2000
(73) Proprietor: REXAM MEDICAL PACKAGING LIMITED, London SW1X 7NN (GB)
(72) Inventor: CHRISTOPHERSON, Roy, Blunsdon Swindon Wiltshire SN2 4BG (GB); MILES, Peter, John, Longwell Green Bristol BS15 6BW (GB); STELL, David, Downend Bristol BS16 6NJ (GB)
(74) Representative: Claisse, John Anthony, Dr.
(86) International application number: GB9801001
(87) International publication number: WO98045115

(56) References cited:
- EP-A- 0 175 451
- EP-A- 0 312 226
- EP-A- 0 403 161
- EP-A- 0 562 867
- GB-A- 2 296 466

## Description

This invention concerns polymeric films which are capable of being heat sealed to surfaces to provide peelable seals between the films and such surfaces.

Peelable seals between polymeric films and a variety of surfaces are well known in the packaging art, for example for the packaging of foodstuffs and medical equipment. The ability to peel such seals generally facilitates the opening of sealed packages, and in addition such seals often provide evidence of tampering once they have been peeled.

The mechanism by which such seals can be peeled, and the force required to do so, will usually depend on the materials involved in forming the heat seal. However, peeling will either involve separation of the boundary between different materials in the seal area or the internal rupture of a polymeric layer through the seal area.

Peeling by layer separation through the heat seal can either be by failure of the heat seal itself or by failure of the inter-ply adhesion between layers of the film or of the material to which the film is heat sealed. In general both occur as a result of an at least partial incompatibility between two adjacent layers which are to be peeled so that when peeling is effected the layers part at the interface between these layers. Examples of peelable seals which fail by parting of the heat seal itself are described in EP0258527, a film consisting of a layer of polyethylene having a heat seal layer of a blend of polyethylene and polyisobutylene being peelable from polypropylene film after having been heat sealed to it. In this case the partial incompatibility occurs between the blend of polyethylene and polyisobutylene in the heat seal layer and the polypropylene film to which it is heat sealed, there being a much higher compatibility between the blend and the polyethylene of the heat sealable film. As will be appreciated, such incompatible blends of polymers can also be used to weaken the inter-ply strengths within heat sealable films so that when their heat seals are peeled, the plys separate.

In GB-A-2 296 466, a heat sealable polymeric film with an outer, heat sealable layer, an intermediate layer (in contact with the seal layer) and at least one further polymeric layer, is disclosed, for packaging purposes. The intermediate layer consists of a blend of propylene and ethylene polymers. One of the polymers in the blend can be a propylene/ethylene copolymer. The intermediate layer is preferably 3 µm or more thick, for instance 7 µm thick. The base layer is e.g. polypropylene (claim 2).

The problem with peeling of the heat seal itself is that in general the ability of the seal to peel depends on both the composition of the heat seal layer of the film and the polymer which forms the surface to which it is heat sealed. Thus the incompatibility at the interface between the film and the surface to which it is to be sealed can range from high, with the result that unacceptably low seal strengths result, to low, so that the resulting heat seals are so strong that they will not peel before tearing of the film occurs. Furthermore, when such seals do peel they usually don't provide evidence that peeling has taken place. This latter deficiency is a particular problem in the packaging of foodstuffs and medical equipment where maintaining sterile conditions within packages is essential and the risk of a package being opened and re-sealed without demonstrable evidence that the pack has been opened cannot be tolerated.

It should also be appreciated that although peeling at the heat seal layer/article interface may be possible to achieve by a suitable choice of polymers for the heat seal layer and the article to which it is to be heat sealed, this can become impossible if the article is made of other materials, for example fibrous materials such as uncoated paper, and other fibrous non-woven materials such as the material sold by DuPont under the Trade Mark "Tyvek". This is a serious deficiency because paper is widely used as a packaging material for medical equipment.

Heat sealable films which peel by failure at an inter-ply boundary within their structures can be used to form peelable seals with a wide variety of materials, for example paper and thermoplastic polymers, since the strength of the heat seal does not determine peelability. Because peeling of the seal occurs within the thickness of the heat sealable film by (1) breaking through the seal layer at the beginning of the peel, then (2) delamination in the region of the heat seal, and (3) breaking through the seal layer at the end of the peel, part of the film necessarily remains adhered to the surface to which it has been heat sealed, resulting in strings of polymer hanging from the edges of the heat seal zone. Not only is this unsightly, it can potentially cause contamination of the packaged goods, and this could present very serious problems with medical equipment, for example syringes and equipment to be used with blood products. In addition, as the delamination is an adhesive peel this leads to a lack of evidence of seal integrity and thus such seals are not tamper evident. Coextrusions of high density polyethylene and Surlyn (Trade Mark) for cereal packet liners are examples of this type of peelable seal system.

As an alternative to peeling at layer boundaries, it has also been proposed to form peelable heat seals by the use of heat sealable films which include at least one outer layer having a relatively low internal cohesive strength. Peeling then takes place by rupturing of this layer within its thickness, with the result that when the heat seal area is opened part of this layer remains on the peeled film and part also remains on the surface to which the film has been heat sealed. Peeling of such films is in general dependant on the nature of the surface to which the film is heat sealed. Such seals can provide evidence of tampering because the area of the film where the relatively weak layer has peeled apart often becomes opaque. However, stringing and consequential possible contamination can be a problem with such films, since peeling within the layer having a low internal cohesive strength rather than rupture to the outside of the film tends to continue outside the heat seal zone.

Examples of layers which can be used to produce seals which peel by rupture within their thickness include blends of thermoplastic polymers with incompatible fillers. Such fillers can be inorganic particulates or incompatible polymers. As will be appreciated, for such layers to rupture internally rather than merely tear, they will need to have bond strengths to adjacent layers which are stronger than the internal cohesive strength of the layer itself.

Heat seals of polymeric films to non-woven materials having adhesive coatings can provide evidence of peeling of seals formed between them, adhesive failure being within the coating at the interface between the film and the non-woven material. This can lead to a whitening or opacity in the heat sealed region of the film as coating has transferred to the film where peeling has taken place. Furthermore, they tend to have fairly constant peel strengths after sealing irrespective of the temperature and pressure used to form the seal because peel strength only depends on the mechanical properties of the coating when sealing occurs within it. This is in contrast, for example, with low density polyethylene/polybutene peel systems where peel strength tends to depend on sealing temperature, the time taken to form the seal, and the pressure used to effect the seal.

According to the present invention there is provided a heat sealable polymeric film comprising an outer polymeric heat seal layer comprising a blend of a polyethylene or a propylene/ethylene copolymer with an additive which embrittles the heat seal layer at the temperature of peeling, the additive comprising a poly-di-pentene or a polyterpene, an α-methyl styrene resin, a vinyltoluene/α-methyl styrene resin, or a modified aromatic resin, the blend having a sufficiently low viscosity over its heat sealing temperature range to penetrate the interstitial spaces between the fibers of a non-woven material, an intermediate polymeric layer comprising a blend of a polyolefin and talc which facilitates cohesive splitting within the layer when the heat sealed film is peeled, and at least one further polymeric layer.

Films in accordance with the present invention have been heat sealed to paper to form heat seals which peel readily with low stringing. Furthermore, the peeled seals have shown good evidence of peeling through the second layer, this being enhanced by pigmenting the heat seal layer or the second layer. The consequence of pigmenting either the heat seal layer or the second layer is that the paper in the peelable regions of the seal becomes pigmented because the heat seal layer has penetrated into the paper during the heat sealing process. On effecting peeling the heat seal layer ruptures through the second layer, the second layer splits internally, and corresponding regions of the film and paper become opaque and pigmented in the seal region, thereby providing very good evidence of tampering with the seal. In addition to providing evidence of tampering, pigmentation of the heat seal layer also facilitates checking of the integrity of the seal after it has been formed because the appearance of the heat seal layer usually changes in regions where good heat sealing has taken place.

Films in accordance with the present invention have shown good evidence of peeling through the second layer, with the same mechanism as mentioned above, this being enhanced by pigmenting the outer, heat seal layer or the second, peel layer and with the third layer being of a different color. In this case, for example with the seal layer blue and the third layer yellow, the film and the heat seal region look green, while the peeled region of the non-woven material looks blue and the peeled regions of the film look a frosty yellow. Other color combinations are also possible, for example red and yellow to produce orange films and seals, and blue and red to produce purple films and seals.

Peelable seals formed between films in accordance with the present invention and non-wovens have shown substantially constant peel strengths irrespective of heat seal temperature as a result of the peel strength primarily depending on the mechanical properties of the second layer and not the strength of the heat seal. This can enable films of the present invention to be used in applications where heat sealing is effected within a wide temperature range using a wide range of sealing conditions. These are features normally associated only with cohesive splitting of polymeric coatings applied to non-wovens adhered to films and simple delamination type peels.

When heat sealed to paper the peeling force is preferably less than 3N/15mm, and when heat sealed to non-woven fabrics this force can usually be higher, for example less than 8N/15mm with the non-woven fabric sold under the Trade Mark "Tyvek".

The polymer forming the heat seal layer should be such that at the temperatures used to form heat seals, for example 110 to 180°C, it should have a sufficiently low viscosity that it penetrates into and around the fibers of the fibrous materials to which the films are being heat sealed. Penetration of the heat seal layer into the fibrous layer in general serves to effect a mechanical interlocking between the heat seal layer and the fibrous material. The depth of penetration and the degree of interlocking will depend upon the chemical composition and the relative quantities of the materials forming the seal layer, the fiber dimensions, packing and type, the openness of the sealing face of the non-woven material, and the heat sealing temperature, pressure and dwell time. In addition, it should also be sufficiently brittle to facilitate rupture through to the second layer where peeling takes place.

The polymer for the heat seal layer is a polyethylene or a propylene/ethylene copolymer in admixture with a polymer which is itself a brittle solid at room temperature but which has a low viscosity when melted. Examples of polyethylenes which can be used to form the heat seal layer include, for example low density polyethylene or linear low density polyethylene. The brittle additive is preferably compatible with the polyethylene or propylene/ethylene copolymer with which it is blended, and is selected from poly-di-pentene, polyterpenes, α-methyl styrene resins, vinyltoluene/α-methyl styrene resins, and modified aromatic resins. Examples of brittle additives which can be used in accordance with the present invention include hydrogenated and pure monomer hydrocarbon resins sold by Hercules Inc under the Trade Marks "Regalite", "Kristalex" and "Piccotex".

The relative amounts of polymer and additive in the heat seal layer can usually be varied widely. However, very small amounts of a brittle additive will result in the heat seal layer itself being insufficiently brittle to break upon peeling when the heat seals are peeled, and very large amounts of such an additive can adversely affect the heat seal and other properties of this layer. Preferred blends contain at least 5wt% of a brittle additive, but it is generally preferred that they should contain not more than 30wt% of such an additive.

The intermediate layer serves to impart peelability to films of the present invention by cohesive splitting within the thickness of this layer. However, it is particularly preferred that the force per unit area required to effect peeling of the seal is less than the force per unit area required to remove fibers from a fibrous material when the film has been heat sealed to such a material.

The materials used to achieve this effect are blends of polyolefins with talc. Examples of polyolefins which can be used to form the intermediate layer include polyethylenes, for example low density polyethylene, and copolymers of propylene and ethylene. Low density polyethylene and polypropylene are particularly preferred as they have a low elongation at break when compared with other polyolefins, for example polybut-1-ene and linear low density polyethylene.

The amount of talc required to reduce the cohesive strength of the intermediate layer so that it will peel by splitting within its thickness can be varied within wide limits. However, if insufficient talc is present, the force required to effect peeling can become excessive, and if very large amounts of talc are used, the intermediate layer can become too weak. In general, it is preferred that the intermediate layer contains from 15 to 65wt% of talc, and more particularly from 45 to 55wt%. As will be appreciated, particulate talc in the intermediate layer will usually impart at least some degree of opacity to the films, and it may be possible to reduce this opacity by the inclusion in this layer of a polymer which is incompatible with the polyolefin of the layer. For example, the addition of polybutylene to polyethylene can enable lower amounts of talc to be used to achieve substantially the same peel strength. More particularly, substantially similar peel strengths can be achieved, but with reduced opacity, by using a blend of 55wt% of low density polyethylene and 15wt% of polybutylene containing 30wt% of talc rather than a 50:50 (wt/wt) mixture of low density polyethylene and talc.

Changing the polymer of the intermediate layer will often necessitate the use of different incompatible polymers in the intermediate layer. For example, if propylene based copolymers with ethylene are used as the base polymer for the intermediate layer, other polymers can be used to reduce the amount of inorganic filler required to reduce the cohesive strength of the intermediate layer, e.g. ethylene based ionomers and low density polyethylene.

It should be noted that when certain polymers, for example poly-butylene, are present in the intermediate layer, they may give rise to stringing of this layer when the heat seals are peeled, and it is therefore preferred that when they are used in this layer, they should be present in amounts which do not result in unacceptable degrees of stringing.

The thicknesses of the heat seal layer and the intermediate layer can in general be varied within wide limits. However, it is generally preferred that the heat seal layer be at least 5µm thick when the films are to be heat sealed to fibrous materials such as paper and non-wovens in order for there to be sufficient of the heat seal layer material present to be penetrated into the fibrous material, whilst thicknesses of greater than 20µm are not usually required. Heat seal layers which are approximately 10µm thick have been found satisfactory for the purposes of the present invention.

The intermediate layer is preferably not more than 20µm thick since the filler in this layer tends to impart haze and opacity to the films. Intermediate layers with a thickness of 5µm and less are generally less preferred because they can be difficult to produce, and the preferred range of thickness is about 10µm.

Films in accordance with the present invention also include at least one further polymeric layer, and indeed the two specified layers can in general be present as additional layers on any of a wide variety of polymeric films, thereby providing such films with the ability to form heat seals which peel particularly well. In some instances the two specified layers can merely be adhered directly to the surface of such a film so that the heat seal layer forms an external surface of the resulting multilayer film. In others, it may be necessary to include a tie layer to effect this bond.

Particularly preferred further polymeric layers for use in films of the present invention include layers of a polyamide, a polycarbonate, a polyester, polyvinyl chloride, a polyester-glycol copolymer, or polypropylene, these usually requiring an adhesive or tie layer to adhere them to the intermediate layer, and blown or cast coextruded films of high density polyethylene and low density polyethylene, and blown or cast coextruded films of ethylene vinyl acetate with ethylene acrylate copolymers or styrene-butadiene copolymers. These are examples of film structures which are widely used in the medical packaging art.

Films in accordance with the present invention can be produced by known methods. However, it is generally preferred to produce them by coextruding melts of the polymers and additives required for the various layers of the final films, followed by cooling to solidify the polymers in the form of a film. In general films of the present invention will not be oriented, but they can if desired be mono- or bi-axially oriented, for example using known methods. Another method is to laminate a film of the present invention, for example a four layer film consisting of an outer layer of high density polyethylene, an intermediate layer of low density polyethylene, a peelable layer, and an outer heat sealable layer, to another film, for example of a polyamide (nylon), a polycarbonate, a polyester, polyvinyl chloride, or a polyester-glycol copolymer, or to a foil.

Films in accordance with the present invention can also be produced by coextrusion coating of the heat seal layer and the intermediate layer on to a suitable support layer, for example a polyamide (nylon), a polycarbonate or a polyester, paper or a foil, using an adhesive layer to bond the two outer layers to the backing material.

The present invention further provides peel-open packages comprising a film in accordance with the present invention heat sealed to form a package.

Reference will now be made to the accompanying drawings which illustrate the formation of a heat seal between a film in accordance with the present invention and paper, and an embodiment of package in accordance with the invention:-
Figure 1 shows a section through a film in accordance with the invention about to be heat sealed to a sheet of paper;
Figure 2 shows a section through the film of Figure 1 heat sealed to a sheet of paper;
Figure 3 shows the heat seal of Figure 3 after it has been peeled;
Figure 4 is a perspective view of the embodiment of a heat sealed package in accordance with the invention;
Figure 5 is a perspective view of the embodiment of Figure 4 after it has been partially peeled open;
Figure 6 shows a section on line I-I of Figure 4; and
Figure 7 is a perspective view of a partially opened bag or pouch in accordance with the invention.

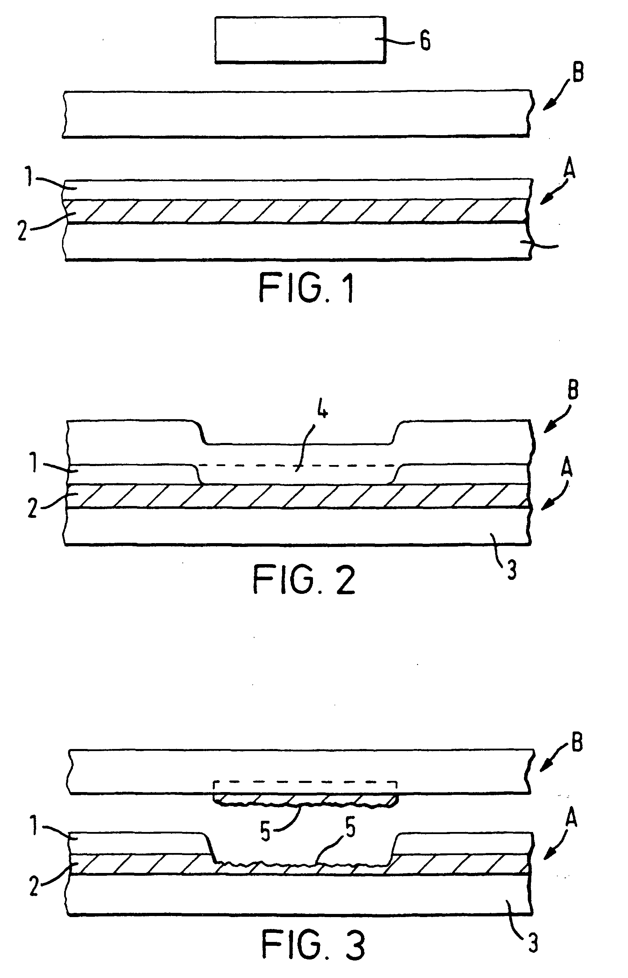

Figure 1 shows a film in accordance with the present invention (A) before being heat sealed to a sheet of paper (B) using a heat sealing bar 6, the film (A) consisting of a heat seal layer 1, a peelable intermediate layer 2, and a base layer 3.

The film (A) is then heat sealed to the paper (B) to form a heat seal 4 as shown in Figure 2. As can be seen, the heat seal layer 1 has penetrated into the paper as shown at 5, the paper (B) now being either in contact with the peelable intermediate layer 2 or close to being in contact with the peelable intermediate layer 2. Outside the heat seal zone 5 the paper (B) is in contact with the heat seal layer 2 but is not adhered to it.

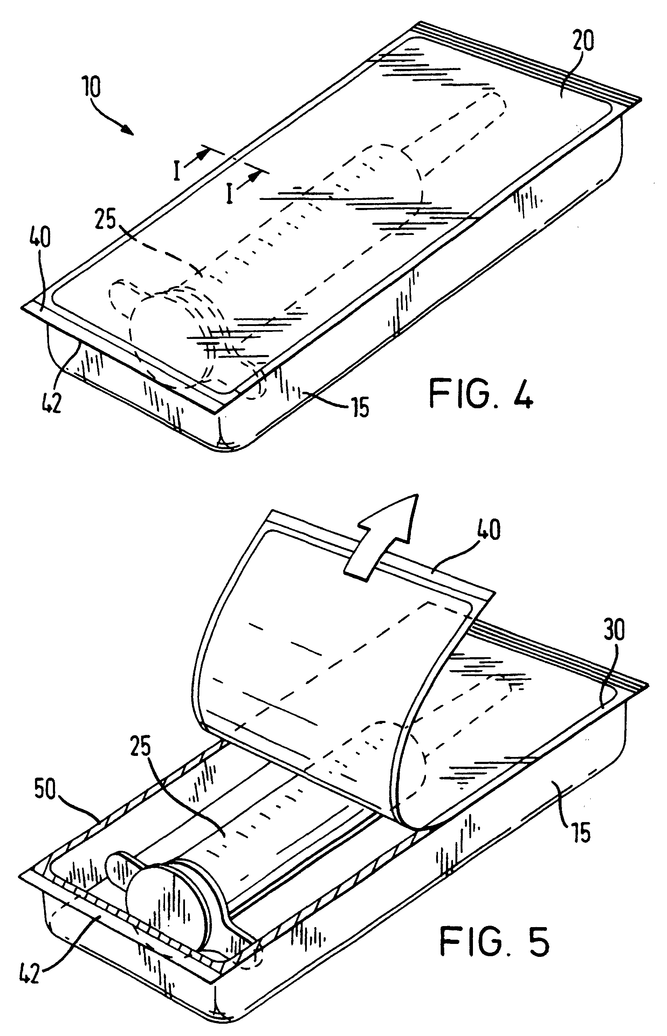

The heat seal is then peeled to produce a peeled seal as shown in Figure 3, the brittle seal layer rupturing through to the peelable intermediate layer, and the peelable intermediate layer having split within its thickness leaving some of it on the paper (A) in the heat seal zone 5, whilst some of it remains on the film in this zone.

The brittle nature of the heat seal layer 1 causes it to fracture cleanly on both sides of the heat seal 5, thereby avoiding stringing.

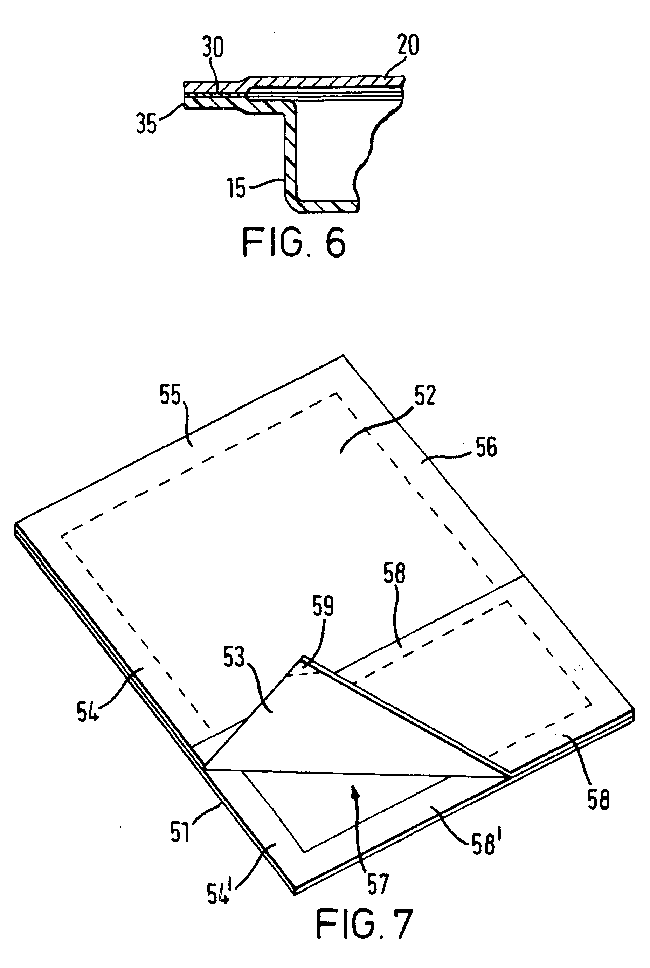

The peel-open package 10 shown in Figures 4 and 5 consists of a shaped polymeric film or sheet 15 with a lid 20 adhered thereto along a continuous seal line 30. An article 25, a syringe being illustrated as an example, is encapsulated between the film 15 and the lid 20. The film 15 has a three layer structure as illustrated in Figure 1 for film (A) but it is shown in Figure 6 as a monolayer to simplify the drawing.

As will be appreciated, the film 15 can be formed into any desired shape, for example to fit the general shape of the article 25. The film 15 can, for example, be shaped as a blister, a tray, a bag or a pouch.

The term "blister" is used herein to refer to a container formed from a flexible film which itself has been formed to have a recessed central portion and an adjacent substantially flat peripheral portion which continuously surrounds the central portion. The heat seal 30 is then formed between the film 15 and the lid 20 along a continuous line on the peripheral portion surrounding the central portion, the heat seal 30 having a structure as shown at 4 in Figure 2 with the heat seal layer 1 in Figure 2 having been adhered on to and penetrated into the lid 20.

Figure 7 shows a breathable bag or pouch in accordance with the present invention consisting of an upper sheet of film 51 heat sealed along three edge portions 54, 55 and 56 to a larger lower sheet of film 52, the sheets 51 and 52 each being of a film in accordance with the present invention. A non-woven sheet 53 has been heat sealed over the sheets 51 and 52 to form a sealed bag or pouch.

Instead of sheets 51 and 52 both being of films in accordance with the present invention, the sheet 51 being of a heat sealable film which is not in accordance with the present invention, for example a hitherto proposed medical packaging film. The non-woven sheet 53 is again sealed both to the sheet 52 and to the sheet 51 to form a seraled bag or pouch.

For clarity, the bag or pouch in Figure 7 is shown empty. However, it will be appreciated that articles to be packaged that are substantially flat, for example dressings or gloves, can be incorporated into the bag or pouch during its formation, for example prior to forming the seals 54, 55, 56 and 58. Bulkier articles can be introduced into the bags or pouches by leaving one of the edge seals, for example the edge portion 55, unsealed and then introducing them with into the bags or pouches prior to sealing the unsealed edge portion 55.

As will be appreciated, these bags or pouches and their contents can be sterilised by exposure to a sterilant gas, for example ethylene oxide.

Packaged articles can then be removed from the sealed bags or pouches via an aperture 57 which is formed when the non-woven sheet 53 is peeled from the lower sheet 52. In general, peeling can be facilitated by the use of a peel tab 59 which is formed by incomplete sealing of a corner of the sheet 53 to the lower sheet 52.

The bag or pouch in Figure 7 is shown partially peeled open, the sheet of non-woven material 53 having been peeled back from the sheet 51 to leave peeled heat seal regions 54' and 58' of the peeled edge portions 54 and 58 on the film 51 which has become opaque as a result of the seals having been peeled.

The term "tray" is used herein to refer to containers having a generally similar shape to that of blisters but being formed from a generally stiffer film than is used to form blisters.

Blisters and trays are preferably formed by thermoforming flat sheets of film, for example using known methods.

The term "bag" is used herein to refer to containers formed from essentially flat films which have been folded at least once. In general, all but one of the non-folded edges of such bags will be sealed before an article is placed into the bag after which the bag can be heat sealed to form a continuous seal.

The term "pouch" is used herein to refer to packages produced from substantially flat films which have not been folded or formed but have been sealed to a lidding material along a continuous seal line.

In all cases, the packages are preferably sealed by applying heat and pressure to the area which is to be sealed.

In order to facilitate the peeling open of the package 10 by peeling the heat seal 30, the lid 20 and the film 15 have pull tabs 40 and 42 respectively which can be gripped in each hand to apply a peeling force to the seal. The seal then peels as illustrated with reference to Figure 3.

Once the seal 30 has been peeled it provides evidence of peeling having taken place by a change of appearance of the previously sealed area 50.

Peel-open packages in accordance with the present invention can be produced by known methods, for example using known packaging machinery. For example, films in accordance with the present invention can be used with horizontal form-fill-seal machines which first produce a three dimensional series of containers from a reel of the film using heat and pressure or a vacuum to form a series of pockets in the film. Articles to be packaged are then placed in the pockets in the film and the machine is then used to heat seal a web of a lidding material under pressure over the pockets, for example using a heated platen, so that continuous seals are produced between the film and the lidding material around each of the pockets. Individual packages can then be cut from the resulting assembly. These machines can be used to form packages which use blisters or trays to contain the articles.

Hitherto proposed bag or pouch making machines can be used to form essentially two dimensional packages in accordance with the present invention. Using these machines, the first stage will usually be to unwind a sheet of film in accordance with the present invention from a first reel so that its heat seal layer is facing upwards.

Film in accordance with the present invention, or a hitherto proposed medical packaging film with one surface which will heat seal to the first film and another surface which can be sealed to a non-woven sheet is then fed from a second reel, with the heat seal layer of the second film downwards, over the film from the first reel. A sheet of a non-woven material is fed from a third reel adjacent to and partially overlapping an edge portion of the film from the second reel. The non-woven material is then heat sealed or welded to the film 52 from the second reel to form the sealed region 58 of the finished bags or pouches.

The combination of the film 52 and the non-woven material 53 is then heat sealed to the sheet 51 along edge portions 54, 56 and 58, for example using a platen sealer. The edge portion 55 can be sealed at the same time if essentially flat articles are being packaged, the articles having been placed on the sheet 51 before the seals 54, 55, 56 and 58 are formed. The resulting sealed bags or pouches can then be separated by cutting between adjacent bags or pouches. More usually, however, the bags or pouches will be separated from each other with the edge portion 55 left unsealed. The resulting opening in the bags or pouches allows a variety of articles to be inserted into them, including essentially flat or more particularly relatively bulky articles, before being sealed along the edge portion 55. The sealed bags or pouches can then be sterilised.

As will be appreciated, the conditions used to form a heat seal between the non-woven material 53 and the film 52 from the second reel should not be such as to seal the film 52 from the second reel to the film 51 from the first reel or peeling of the non-woven material 53 from the film 51 will not open the pouch. This could happen, for example, if the seal between the non-woven material 53 and the film 52 is formed by heat sealing through the film 51.

Packages in accordance with the present invention can also be produced using so-called four side seal machines. These are also in essence horizontal form-fill-seal machines but unlike the three and two dimensional packaging machines described above, they are effectively continuous motion rather than intermittent motion machines. In this case, essentially two dimensional packages are produced which are similar to those produced by the pouch machine described above, but the seals around the articles are formed using co-operating heated and unheated rollers which form seals in the flow direction of the machine and co-operating heated and unheated platens to form cross seals, thereby forming a continuous seal between the two webs around each of the articles. As with the other machines, individual packages can them be cut from the resulting assembly.

The following Examples are given by way of illustration only.

### Example 1

A five layer polymer film 85µm thick was cast by coextruding melts of the appropriate polymers through a slot die. The film produced had a 30µm thick core layer of low density polyethylene with, on one surface, a 30µm thick layer of nylon 6 adhered to the core layer by a 5µm thick later of a tie layer consisting of a maleic anhydride grafted polyethylene, and on the other surface a 10µm thick layer of a blend of equal weights of low density polyethylene and talc (90wt% having a particle size of from 1-10µm) and an outer layer of a 10µm thick blend of low density polyethylene and a low molecular weight hydrogenated hydrocarbon resin. The film was cooled and then wound up.

Thereafter samples of this film were heat sealed to an uncoated paper using a sealing bar applied to the paper at different temperatures from 120°C to 160°C using a dwell time of 1 sec and a pressure of 500kPa.

The resulting heat seals were allowed to cool and they were then peeled by pulling the paper from the film. In each case, peeling took place by fracture through the outer layer formed from the blend of the LDPE and the hydrocarbon resin and then by cohesive splitting within the intermediate layer in the area of the heat seal. Immediately after the heat seal region the peel broke out through the outer layer to give a clean peel without stringing.

The peel strengths of the seals formed at 120, 140 and 160°C were 2.7, 2.7 and 2.8N/15mm respectively, as measured using a constant 90° peel test, with 50mm length samples conducted at 100mm/min on a Lloyd mechanical tester showing that the peel strength is substantially independent of heat seal temperature.

Substantially identical films were produced, but with the intermediate layer of the low density polyethylene/talc blend being 5µm thick rather than 10µm thick.

Heat seals were produced as described above, at 120, 140 and 160°C, and the peel strengths of these seals were 2.5, 2.7 and 2.9N/15mm, respectively. The seals peeled cleanly and without stringing.

### Example 2

A series of five layer films was prepared in a manner similar to that described in Example 1 except that the blend of low density polyethylene and talc was replaced by a variety of blends of low density polyethylene, polybutene-1 and talc. In each case the layers of this blend were 10µm thick, and the outer layer of the blend of low density polyethylene and the low molecular weight hydrogenated hydrocarbon resin was 5µm thick. The overall thicknesses of these cast films were therefore 80µm.

Samples of these films were then heat sealed to uncoated paper as described in Example 1, and each film type was heat sealed to the paper at either 120 or 150°C. The peel strengths which were obtained are shown in Table 1, and the seals peeled cleanly without stringing.

**TABLE 1**

| Wt% LDPE/PB/Talc | Seal Temp (°C) | Peel Strength (N/15mm) |
|---|---|---|
| 50/30/20 | 120 | 1.7 |
| 50/30/20 | 150 | 2.2 |
| 60/20/20 | 120 | 3.4 |
| 60/20/20 | 150 | 3.6 |
| 55/15/30 | 120 | 3.8 |
| 55/15/30 | 150 | 4.0 |
| 50/20/30 | 120 | 2.8 |
| 50/20/30 | 150 | 3.1 |

### Example 3

A five layer polymer film 100µm thick was coextruded through a slot die from melts of the appropriate polymers. The film had a first layer 25µm thick consisting of an ethylene/vinyl acetate copolymer, a second layer 30µm thick consisting of an ethylene acrylate ionomer (Surlyn), a third layer 25µm thick consisting of the ethylene/vinyl acetate copolymer used for the first layer, a fourth layer 10µm thick consisting of a blend of equal weights of low density polyethylene and talc, and a fifth layer 10µm thick consisting of 80wt% of low density polyethylene and 20wt% of a low molecular weight hydrogenated hydrocarbon resin. The film was cooled and then wound up.

Samples of the film were then heat sealed to uncoated paper as described in Example 1, and the peel strengths of the seals formed at different temperatures were then determined as described in Example 1. The peel strengths of the seals formed at 130, 140, 150 and 160°C were 3.2, 3.1, 3.2 and 3.1 N/15mm respectively, demonstrating that peel strength was independent of sealing temperature. The seals peeled cleanly through the heat seal layer and without stringing.

Another film of the same composition was prepared, except that the first, second and third layers were 45, 40 and 45µm thick respectively, the overall thickness of the film being 150µm. The respective peel strengths of heat seals formed between this film and paper under substantially the same conditions at 120, 130, 140, 150 and 160°C were substantially the same as had been obtained for the 100µm thick film. Again, the seals peeled cleanly through the heat seal layer and without stringing.

### Example 4

A four layer polymeric film 100µm thick was produced by coextruding melts of the appropriate polymers through a slot die. The film had a first layer 50µm thick consisting of high density polyethylene, a second layer 30µm thick consisting of low density polyethylene, a third layer 10µm thick consisting of a blend of equal weights of low density polyethylene and talc, and a fourth layer consisting of a blend of 80wt% of low density polyethylene and 20wt% of a low molecular weight hydrogenated hydrocarbon resin. The resulting film was cooled and then wound up.

Samples of the film were then heat sealed to uncoated paper as described in Example 1, and the peel strengths of the seals formed at different temperatures were then determined as described in Example 1. The peel strengths of the seals formed at 130, 140, 150 and 160°C were 3.3, 3.3, 3.0 and 3.0 N/15mm respectively, demonstrating that peel strength was substantially independent of sealing temperature. The seals peeled cleanly through the heat seal layer and without stringing.

Another film of the same composition was prepared, except that the first and second layers were 70 and 60µm thick respectively, the overall thickness of the film being 150µm. The respective peel strengths of heat seals formed between this film and paper under substantially the same conditions as described in Example 1 at 120, 130, 140, 150 and 160°C were substantially the same as had been obtained for the 100µm thick film. Again, the seals peeled cleanly through the heat seal layer and without stringing.

### Example 5

A four layer polymer film 40µm thick was produced by coextruding melts of the appropriate polymers through a slot die. The film had a first layer 10µm thick consisting of high density polyethylene, a second layer 10µm thick consisting of low density polyethylene, a third layer 10µm thick consisting of equal weights of low density polyethylene and talc, and a fourth layer 10µm thick consisting of a blend of 80wt% of low density polyethylene and 20wt% of a low molecular weight hydrogenated hydrocarbon resin. The film was cooled and then wound up.

This coextruded film was subsequently adhesive laminated to a 12µm thick polyester film using a heat curing liquid adhesive to a thickness of 2µm, and the resulting six layer film was cooled and then wound up.

Samples of the film were then heat sealed to uncoated paper as described in Example 1, and the peel strengths of the heat seals formed at different temperatures were then determined as described in Example 1. The peel strengths formed at 120, 130, 140, 150, 160, and 170°C were 2.9, 3.0, 2.9, 2.9, 3.0 and 2.9N/15mm respectively. The seals peeled cleanly through the heat seal layer and without stringing.

### Example 6

Three dimensional packages were produced using a horizontal form-fill-seal machine from a coextruded cast film of the following construction:-

| | |
|---|---|
| Nylon 6 | 20µm |
| Adhesive layer | 10µm |
| Low density polyethylene (LDPE) | 20µm |
| Peel layer (LDPE/polybutene/talc) | 10µm |
| Seal layer (LDPE + hydrocarbon resin blend) | 10µm |

heat sealed to an opposing web of a non-woven mat of high density polyethylene fibers (Tyvec 1059B). The film was first vacuum formed to form blisters into which soft dressings were placed before the opposing web was heat sealed with a continuous seal around each blister. Heat sealing was effected at a temperature of 125°C using a pressure of 5 bar and a dwell time of 1 second.

The heat seals of the resulting packages peeled readily and the peeled seals showed evidence of peeling having taken place by a change in appearance in those regions.

### Example 7

Two dimensional packs were produced using a horizontal form-fill-seal machine, the heat sealable film being that used in Example 6 and the opposing web being a medical grade paper which was a fiberous non-woven mat of cellulosic fibers. The articles sealed in the packages formed by heat sealing the film to the opposing web were surgeon's golvepacks.

Heat sealing was effected at 180ºC at a pressure of 5 bar for a time of 0.5 seconds.

Other film structure in accordance with the present invention include:-
nylon/adhesive/LDPE/peel layer/heat seal layer;
ethylene vinyl acetate copolymer/ethylene ionomer/ethylene vinyl acetate copolymer/adhesive/peel layer/heat seal layer;
high density polyethylene/LDPE/peel layer/heat seal layer;
polyester/adhesive/LDPE/peel layer/heat seal layer.

## Claims

1. A heat sealable polymeric film comprising an outer polymeric heat seal layer comprising a blend of a polyethylene or a propylene/ethylene copolymer with an additive which embrittles the heat seal layer at the temperature of peeling, the additive comprising a poly-di-pentene or a polyterpene, an α-methyl styrene resin, a vinyltoluene/α-methyl styrene resin, or a modified aromatic resin, the blend having a sufficiently low viscosity over its heat sealing temperature range to penetrate the interstitial spaces between the fibers of a non-woven material, an intermediate polymeric layer comprising a blend of a polyolefin and talc which facilitates cohesive splitting within the layer when the heat sealed film is peeled, and at least one further polymeric layer.

2. A film according to claim 1, wherein the heat seal layer contains from 5 to 30wt% of an additive which embrittles the layer.

3. A film according to either of the preceding claims, wherein the intermediate layer comprises a blend of from 85 to 35 wt% of a polyolefin and from 15 to 65wt% of talc.

4. A film according to any of the preceding claims, wherein the polyolefin of the intermediate layer comprises polyethylene or a propylene/ethylene copolymer.

5. A film according to any of the preceding claims, wherein the blend forming the intermediate layer includes a polymer which is incompatible with the polyolefin.

6. A film according to any of the preceding claims, wherein the intermediate layer is at least 5µm thick.

7. A film according to any of the preceding claims, wherein the at least one further layer comprises a layer of a polyamide, or a layer of a polyester, a polycarbonate, polyvinyl chloride, polypropylene, high density polyethylene, a polyester-glycol copolymer, ethylene vinyl acetate, an ethylene acrylate copolymer, or a styrene-butadiene copolymer.

8. A film according to any of claims 1 to 6, wherein the at least one further layer comprises two layers of ethylene/vinyl acetate copolymers with a layer of a polyethylene ionomer resin therebetween.

9. A film according to any of the preceding claims, wherein the intermediate layer includes a pigment.

10. A film according to any of claims 1 to 8, wherein the heat seal layer contains a pigment.

11. A film according to any of claims 1 to 8, wherein the heat seal layer and the at least one further layer include different colored pigments.

12. A film according to any of claims 1 to 8, wherein the intermediate layer and the at least one further layer include different colored pigments.

13. A heat sealed laminate formed between the heat seal layer of a film according to any of the preceding claims and a non-woven cellulosic or other non-woven polymeric material.

14. A laminate according to claim 12, wherein the non-woven material comprises an uncoated paper or a non-woven fabric.

15. A heat sealed package comprising a heat sealed film according to any of claims 1 to 12.

16. A heat sealed package according to claim 15, in the form of a tray, bag or pouch.

## Patentansprüche

1. Schweißbare Polymerfolie mit einer äußeren Polymer-Schweißschicht aus einer Mischung aus einem Polyethylen oder einem Propylen-/Ethylen-Kopolimer mit einem Additiv, das die Schweißschicht bei einer Abziehtemperatur versprödet, wobei das Additiv ein Polydipenten oder Polyterpen, ein α-Methyl-Styrolharz, ein Vinyltoluen/α-Methyl-Styrolharz oder ein modifiziertes aromatisches Harz aufweist, wobei die Mischung eine ausreichend niedrige Viskosität über ihren Schweißtemperaturbereich besitzt, um in die Zwischenräume zwischen den Fasern eines nicht gewebten Materials einzudringen, einer zwischenliegenden Polymerschicht aus einer Mischung aus einem Polyolefin und Talk, der das kohäsive Trennen innerhalb der Schicht erleichtert, wenn die Schweißfolie abgezogen wird, und wenigstens einer weiteren Polymerschicht.

2. Folie nach Anspruch 1, **dadurch gekennzeichnet, daß** die Schweißschicht von 5 bis 30 Gewichts% eines Additives enthält, welches die Schicht versprödet.

3. Folie nach einem der vorhergehenden Ansprüche, **dadurch gekennzeichnet, daß** die Zwischenschicht aus einer Mischung aus Polyolefin von 85 bis 35 Gewichts% und Talk von 15 bis 65 Gewichts% besteht.

4. Folie nach einem der vorhergehenden Ansprüche, **dadurch gekennzeichnet, daß** das Polyolefin der Zwischenschicht Polyethylen oder ein Propylen-/Ethylen-Kopolymer aufweist.

5. Folie nach einem der vorhergehenden Ansprüche, **dadurch gekennzeichnet, daß** die die Zwischenschicht bildende Mischung ein Polymer einschließt, das unverträglich mit dem Polyolefin ist.

6. Folie nach einem der vorhergehenden Ansprüche, **dadurch gekennzeichnet, daß** die Zwischenschicht wenigstens 5 µm dick ist.

7. Folie nach einem der vorhergehenden Ansprüche, **dadurch gekennzeichnet, daß** die wenigstens eine weitere Schicht eine Schicht aus einem Polyamid, oder eine Schicht aus einem Polyester, einem Polykarbonat, Polyvenylchlorid, Polypropylen, hochdichtem Polyethylen, einem Polyester-Glykol-Kopolymer, Ethylenvenylacetat, einem Ethylenacrylat-Kopolymer oder einem Styrol-Butadien-Kopolymer aufweist.

8. Folie nach einem der Ansprüche 1 bis 6, **dadurch gekennzeichnet, daß** die wenigstens eine weitere Schicht zwei Schichten aus Ethylen-/Vinylacetat-Kopolymeren mit einer Schicht aus einem Polyethylen-Ionomer-Harz dazwischen aufweist.

9. Folie nach einem der vorhergehenden Ansprüche, **dadurch gekennzeichnet, daß** die Zwischenschicht ein Pigment enthält.

10. Folie nach einem der Ansprüche 1 bis 8, **dadurch gekennzeichnet, daß** die Schweißschicht ein Pigment enthält.

11. Folie nach einem der Ansprüche 1 bis 8, **dadurch gekennzeichnet, daß** die Schweißschicht und die wenigstens eine weitere Schicht unterschiedlich gefärbte Pigmente enthalten.

12. Folie nach einem der Ansprüche 1 bis 8, **dadurch gekennzeichnet, daß** die Zwischenschicht und die wenigstens eine weitere Schicht unterschiedlich gefärbte Pigmente enthalten.

13. Verschweißtes Laminat, das zwischen der Schweißschicht einer Folie nach einem der vorhergehenden Ansprüche und einem nicht gewebten Zellulose- oder anderen nicht gewebten Polymermaterial ausgebildet ist.

14. Laminat nach Anspruch 12, **dadurch gekennzeichnet, daß** das nicht gewebte Material aus unbeschichtetem Material oder einem nicht gewebten Stoff besteht.

15. Verschweißte Verpackung mit einer verschweißten Folie nach einem der Ansprüche 1 bis 12.

16. Verschweißte Verpackung nach Anspruch 15 in der Form einer Schale, Tasche oder eines Beutels.

## Revendications

1. Film polymère thermosoudable comprenant une couche polymère externe de thermosoudage comprenant un mélange de polyéthylène ou d'un copolymère de propylène/éthylène avec un additif qui fragilise la couche de thermosoudage à la température de pelage, l'additif comprenant un poly-di-pentène ou un polyterpène, une résine d'α-méthylstyrène, une résine de vinyltoluène/α-méthyl styrène ou une résine aromatique modifiée, le mélange ayant une viscosité suffisamment faible sur sa plage de températures de thermosoudage pour pénétrer les espaces interstitiels entre les fibres d'un matériau non tissé, une couche polymère intermédiaire comprenant un mélange d'une polyoléfine et de talc qui facilite la séparation cohésive à l'intérieur de la couche quand le film de thermosoudage est pelé, et au moins une couche polymère supplémentaire.

2. Film selon la revendication 1, dans lequel la couche de thermosoudage comprend de 5 à 30 % en poids d'un additif qui fragilise la couche.

3. Film selon l'une ou l'autre des revendications précédentes, dans lequel la couche intermédiaire comprend un mélange de 85 à 35 % en poids d'une polyoléfine et de 15 à 65 % en poids de talc.

4. Film selon l'une quelconque des revendications précédentes, dans lequel la polyoléfine de la couche intermédiaire comprend du polyéthylène ou un copolymère de propylène/éthylène.

5. Film selon l'une quelconque des revendications précédentes, dans lequel le mélange formant la couche intermédiaire comprend un polymère qui est incompatible avec la polyoléfine.

6. Film selon l'une quelconque des revendications précédentes, dans lequel la couche intermédiaire a une épaisseur d'au moins 5 µm.

7. Film selon l'une quelconque des revendications précédentes, dans lequel ladite au moins une couche supplémentaire comprend une couche d'un polyamide, ou une couche d'un polyester, d'un polycarbonate, d'un poly(chlorure de vinyle), d'un polypropylène, d'un polyéthylène haute densité, d'un copolymère de polyester-glycol, d'éthylène-acétate de vinyle, d'un copolymère d'éthylène-acrylate ou d'un copolymère de styrène-butadiène.

8. Film selon l'une quelconque des revendications 1 à 6, dans lequel ladite au moins une couche supplémentaire comprend deux couches de copolymères d'éthylène/acétate de vinyle avec une couche d'une résine d'ionomère de polyéthylène entre les deux.

9. Film selon l'une quelconque des revendications précédentes, dans lequel la couche intermédiaire comprend un pigment.

10. Film selon l'une quelconque des revendications 1 à 8, dans lequel la couche de thermosoudage comprend un pigment.

11. Film selon l'une quelconque des revendications 1 à 8, dans lequel la couche de thermosoudage et ladite au moins une couche supplémentaire comprennent des pigments colorés différents.

12. Film selon l'une quelconque des revendications 1 à 8, dans lequel la couche intermédiaire et ladite au moins une couche supplémentaire comprennent des pigments colorés différents.

13. Stratifié de thermosoudage formé de la couche de thermosoudage d'un film selon l'une quelconque des revendications précédentes et d'un matériau cellulosique non tissé ou autre matériau polymère non tissé.

14. Stratifié selon la revendication 12, dans lequel le matériau non tissé comprend un papier non couché ou un tissu non tissé.

15. Emballage thermosoudé comprenant un film thermosoudé selon l'une quelconque des revendications 1 à 12.

16. Emballage thermosoudé selon la revendication 15, sous la forme d'un plateau, d'un sac ou d'un sachet.
